(19)

Europäisches Patentamt
European Patent Office
Office européen des brevets

(11) **EP 2 401 630 B1**

(12) **EUROPÄISCHE PATENTSCHRIFT**

(45) Veröffentlichungstag und Bekanntmachung des Hinweises auf die Patenterteilung:
**03.04.2013  Patentblatt 2013/14**

(21) Anmeldenummer: **09801714.8**

(22) Anmeldetag: **28.12.2009**

(51) Int Cl.:
***G01S 13/42*** *(2006.01)*     ***G01S 13/93*** *(2006.01)*

(86) Internationale Anmeldenummer:
**PCT/EP2009/067940**

(87) Internationale Veröffentlichungsnummer:
**WO 2010/097136 (02.09.2010 Gazette 2010/35)**

(54) **VERFAHREN ZUR ERKENNUNG VON VEREISUNG BEI EINEM WINKELAUFLÖSENDEN RADARSENSOR IN EINEM FAHRERASSISTENZSYSTEM FÜR KRAFTFAHRZEUGE**

METHOD FOR DETECTING ICING AT AN ANGLE-RESOLVING RADAR SENSOR IN A DRIVER ASSISTANCE SYSTEM FOR MOTOR VEHICLES

PROCÉDÉ DE DÉTECTION DE GIVRAGE SUR UN CAPTEUR DE RADAR À RÉSOLUTION ANGULAIRE DANS UN SYSTÈME D'AIDE À LA CONDUITE POUR VÉHICULES À MOTEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.02.2009   DE 102009001243**

(43) Veröffentlichungstag der Anmeldung:
**04.01.2012   Patentblatt 2012/01**

(73) Patentinhaber: **Robert Bosch GmbH**
**70442 Stuttgart (DE)**

(72) Erfinder:
• **HEILMANN, Stefan**
**71229 Leonberg (DE)**
• **GROSS, Volker**
**71254 Ditzingen (DE)**
• **KUEHNLE, Goetz**
**71282 Hemmingen (DE)**
• **BECHLER, Dirk**
**76185 Karlsruhe (DE)**

(56) Entgegenhaltungen:
**EP-A1- 2 000 826     DE-A1- 19 945 268**
**DE-A1- 19 948 253     DE-A1-102005 031 921**

**Beschreibung**

Stand der Technik

Die Erfindung betrifft ein Verfahren zur Erkennung von Vereisung bei einem winkelauflösenden Radarsensor in einem Fahrerassistenzsystem für Kraftfahrzeuge, in dem Signale von mehreren Antennenelementen, die jeweils eine spezifische Winkelcharakteristik aufweisen, mit den entsprechenden Winkelcharakteristiken verglichen werden und der Azimutwinkel eines georteten Objekts anhand einer Winkelfitgüte bestimmt wird, die angibt, wie gut die Signale der Antennenelemente für einen gegebenen Azimutwinkel mit den Winkelcharakteristiken übereinstimmen, wobei ein Indikator für Vereisung gebildet wird.

Ein Verfahren dieser Art ist aus EP 2 000 826 A1 bekannt.

Kraftfahrzeuge werden zunehmend mit Fahrerassistenzsystemen ausgerüstet, z. B. mit sogenannten ACC-Systemen (Adaptive Cruise Control), die es gestatten, den Abstand des eigenen Fahrzeugs zu einem vorausfahrenden Fahrzeug automatisch zu regeln. Zu diesem Zweck werden mit Hilfe des Radarsensors, beispielsweise eines FMCW-LRR-Sensors (Frequency Modulated Wave Long Range Radar) die Abstände und Azimutwinkel sowie die Relativgeschwindigkeiten vorausfahrender Fahrzeuge gemessen.

Die bisher in diesem Zusammenhang eingesetzten Radarsensoren weisen beispielsweise vier Antennenelemente oder Antennenpatches auf, die in der Horizontalen versetzt zur optischen Achse des Radarsensors vor einer Radarlinse angeordnet sind.

In einer ersten Auswertungsstufe ist jedem Antennenelement genau ein Kanal zugeordnet, in dem das von dem betreffenden Antennenelement empfangene Signal ausgewertet wird. Beispielsweise wird bei einem FMCW-Radar, bei dem die Frequenz des gesendeten Radarsignals periodisch moduliert wird, bei jedem Antennenelement das empfangene Signal mit dem zum Empfangszeitpunkt gesendeten Signal gemischt, so daß man ein Zwischenfrequenzsignal erhält, dessen Frequenz den Frequenzunterschied zwischen dem gesendeten und dem empfangenen Signal entspricht. In dem betreffenden Kanal der Auswerteeinrichtung wird dann in jeder Meßperiode ein Frequenzspektrum des Zwischenfrequenzsignals aufgezeichnet. In diesem Frequenzspektrum zeichnet sich jedes geortete Objekt durch einen Peak ab, dessen Frequenzlage vom Abstand und der Relativgeschwindigkeit des betreffenden Objekts abhängig ist. Durch Modulation der gesendeten Frequenz mit unterschiedlichen Rampensteigungen lassen sich aus den erhaltenen Frequenzlagen der Abstand und die Relativgeschwindigkeit berechnen.

Jedes Antennenelement strahlt die Radarleistung mit einer in Abhängigkeit vom Azimutwinkel variierenden Intensität in einen gewissen Raumwinkelbereich ab. Die Amplitude und die Phase des empfangenen Signals ist vom Azimutwinkel des georteten Objekts abhängig. Diese Abhängigkeit, die sogenannte Winkelcharakteristik, läßt sich für ein Standardobjekt in einem gegebenen Abstand und mit einer gegebenen Reflexionsstärke in einem Antennendiagramm darstellen. Durch Abgleich der von den verschiedenen Antennenelementen für dasselbe Objekt erhaltenen Amplituden und/oder Phasen mit den entsprechenden Antennendiagrammen läßt sich dann der Azimutwinkel des betreffenden Objekts bestimmen.

Die Antennenelemente sind hinter einer Radarlinse oder einer sonstigen Abdeckung, einem sogenannten Radom, angebracht und damit gegen Witterungseinflüsse geschützt. Durch einen Wasserfilm oder Schmutzbelag auf der Linse bzw. dem Radom kann jedoch die Radarstrahlung so stark gedämpft werden, daß die Objektpeaks kein ausreichendes Signal/Rausch-Verhältnis mehr aufweisen und somit keine zuverlässige Objekterkennung mehr möglich ist. Man spricht dann von "Erblindung" des Radarsensors. Da sich der Fahrer des Fahrzeugs normalerweise auf die Funktionsfähigkeit des Fahrerassistenzsystems verläßt, ist es aus Sicherheitsgründen wichtig, daß eine Funktionsbeeinträchtigung oder Erblindung des Radarsensors während des Betriebs unverzüglich erkannt werden kann.

Aus DE 199 45 268 A1 ist ein Verfahren zur Blindheitserkennung bekannt, bei dem als Blindheitsindikator unter anderem die mittlere Winkelgüte aller detektierten Objekte verwendet wird. Der Begriff "Winkelgüte" bezeichnet dabei den Quotienten von realem Objektwinkel und der Differenz aus realem und gemessenem Objektwinkel. Wenn die über mehrere Objekte gemittelte Winkelgüte auf eine schlechte Qualität der Winkelerkennung hindeutet, so wird dies als ein Indiz für eine mögliche Verschmutzung oder Erblindung des Radarsensors gewertet.

DE 199 48 253 A1 beschreibt ein Verfahren zur Blindheitserkennung, bei dem die Objektstabilität und der Querversatz eines Zielobjektes bei der Indikation einer Verschnutzung berücksichtigt werden.

DE 10 2005 03 921 A1 beschreibt ein Verfahren, bei dem die Dispersion oder der Pegelunterschied zwischen den von verschiedenen Antennenelementen empfangenen Signalen berücksichtigt wird.

Mit diesen bekannten Verfahren ist es jedoch nicht möglich, eine Eisschicht auf der Radarlinse bzw. dem Radom zu erkennen, da eine Eisschicht im allgemeinen nicht zu einer signifikanten Dämpfung des Radarsignals führt.

Allerdings kann eine solche Eisschicht, da sie einen vom Brechungsindex der Luft verschiedenen Brechungsindex hat, ähnlich wie die Radarlinse selbst zu einer Brechung und damit zu einer Richtungsänderung der Radarstrahlung führen, mit dem Ergebnis, daß Objekte zwar noch erkannt werden können, aber die Bestimmung ihres Azimutwinkels verfälscht wird. Dieser Zustand soll im folgenden als "Winkelblindheit" bezeichnet werden.

Aufgabe der Erfindung ist es, ein Verfahren anzugeben, das es erlaubt, durch Winkelblindheit verursachte Funktionsbeeinträchtigungen des Fahrerassistenzsystems zuverlässig zu erkennen.

Offenbarung der Erfindung

Die Aufgabe wird erfindungsgemäß dadurch gelöst, der Indikator eine monoton fallende Funktion eines gewichteten Mittelwertes der Winkelfitgüten der georteten Objekte ist, wobei Objekte mit hohem Signal/Rausch-Verhältnis stärker gewichtet werden als Objekte mit niedrigem Signal/Rausch-Verhältnis.

Vorteile der Erfindung

Der nach dem erfindungsgemäßen Verfahren gebildete Indikator ermöglicht es, auf eine Vereisung des Radarsensors, d.h., auf eine Eisschicht auf der Radarlinse oder dem Radom zu schließen, die Winkelblindheit verursacht, auch wenn der Radarsensor nicht aufgrund eines Schmutzbelages oder sonstiger Ursachen erblindet ist. Das Verfahren erlaubt es somit, gezielt Zustände zu erkennen, in denen die Funktionsfähigkeit des Fahrerassistenzsystems durch Winkelblindheit beeinträchtigt ist, und geeignete Warn- oder Gegenmaßnahmen einzuleiten, beispielsweise einen Warnhinweis an den Fahrer, eine Selbstdeaktivierung des Systems oder einen Übergang in einen Betriebsmodus, der geringere Anforderungen an das Winkelauflösungsvermögen stellt. Da der mit dem erfindungsgemäßen Verfahren erkannte Zustand speziell auf eine Eisschicht auf der Linse oder dem Radom hindeutet, kann die Gegenmaßnahme auch darin bestehen, daß die Eisschicht durch Beheizung des Radoms abgetaut wird und/oder durch Vibration abgesprengt wird.

Die Winkelfitgüten, die bei dem erfindungsgemäßen Verfahren ausgewertet werden, lassen sich bestimmen, ohne daß der reale Azimutwinkel des Objekts bekannt sein muß. Bei Objekten, deren Peak nur ein sehr niedriges Signal/Rausch-Verhältnis aufweist, ist allerdings generell mit einer geringen Winkelfitgüte zu rechnen, auch dann, wenn keine Vereisung vorliegt. Aus diesem Grund werden solche Objekte bei dem erfindungsgemäßen Verfahren unterdrückt oder zumindest mit verringertem Gewicht berücksichtigt. Das Verfahren beruht somit in erster Linie auf der Auswertung der Winkelfitgüten von Objekten mit hohem Signal/Rausch-Verhältnis, wobei das Vorhandensein solcher Objekte zugleich impliziert, daß keine generelle Erblindung des Radarsensors, jedenfalls keine vollständige Erblindung vorliegt.

In den Unteransprüchen sind vorteilhafte Ausgestaltungen und Weiterbildungen der Erfindung angegeben.

Gemäß einer zweckmäßigen Weiterbildung werden die Objekte, deren Winkelfitgüte in den Indikator einfließt, nicht nur anhand ihres Signal/Rausch-Verhältnisses selektiert, sondern auch anhand eines Eindeutigkeitskriteriums, das darauf hindeutet, daß das Signal, das im Hinblick auf die Winkelfitgüte ausgewertet wird, tatsächlich nur von einem einzelnen Objekt stammt und nicht aus einer Überlagerung der Signale von mehreren Objekten resultiert. Signalpeaks, die aus einer Überlagerung von Signalen von Objekten mit unterschiedlichen Azimutwinkeln resultieren, führen naturgemäß zu einer schlechten Winkelfitgüte und könnten somit, wenn sie nicht unterdrückt würden, eine Vereisung vortäuschen.

Kurze Beschreibung der Zeichnungen

Ein Ausführungsbeispiel der Erfindung ist in den Zeichnungen dargestellt und in der nachfolgenden Beschreibung näher erläutert.

Es zeigen:

Fig. 1 ein Blockdiagramm eines Radarsensors, mit dem das erfindungsgemäße Verfahren ausführbar ist;

Fig. 2 ein Spektrum eines von einem Antennenelement des Radarsensors nach Fig. 1 empfangenen Signals;

Fig. 3 ein Diagramm mit (Amplituden-) Winkelcharakteristiken der Antennenelemente des Radarsensors nach Fig. 1; und

Fig. 4 ein Beispiel für einen Winkelfit auf der Grundlage des Diagramms nach Fig. 3.

Ausführungsformen der Erfindung

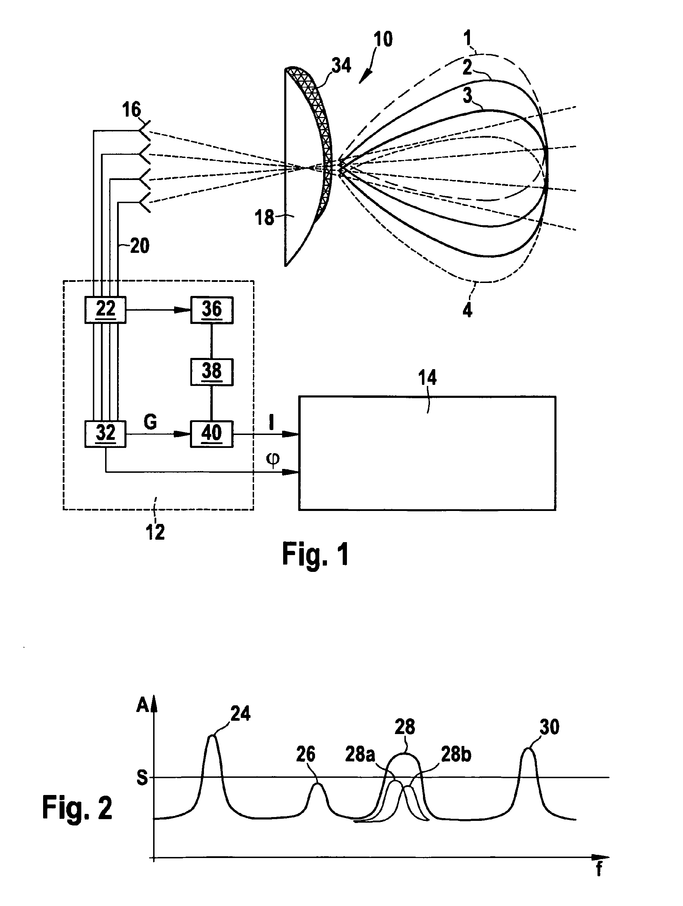

Das in Fig. 1 gezeigte Fahrerassistenzsystem, beispielsweise ein ACC-System, umfaßt einen Radarsensor 10, von dem hier nur die im Zusammenhang mit der Erfindung wesentlichen Komponenten dargestellt sind, eine erste Auswertungsstufe 12 und eine zweite Auswertungsstufe 14.

Der Radarsensor 10 weist vier Antennenelemente 16 auf, die vor einer gemeinsamen Linse 18 angeordnet sind. Wenn der Radarsensor 10 in ein nicht gezeigtes Kraftfahrzeug eingebaut ist, so weist die optische Achse der Linse 18 beispielsweise in Längsrichtung des Fahrzeugs, und die Antennenelemente 16 sind seitlich versetzt zueinander auf einer horizontalen Linie angeordnet. Durch die Linse 18 wird die emittierte Radarstrahlung gebündelt, und die empfangenen Radarechos werden wieder auf die Antennenelemente 16 fokussiert. Die Winkelverteilung der emittierten Strahlung und der Empfindlichkeit ist in Fig. 1 durch Radarkeulen 1-4 symbolisiert, je eine für jedes Antennenelement. Aufgrund des Versatzes der Antennenelemente sind die Achsen der einzelnen Radarkeulen, in Fig. 1 gestrichelt eingezeichnet, im Azimut jeweils um einen bestimmten Winkel, beispielsweise um 4°, gegeneinander versetzt.

Der Ausgang des Radarsensors 10 weist vier Kanäle 20 auf, die jeweils einem der Antennenelemente 16 zugeordnet sind.

Als Beispiel soll angenommen werden, daß es sich bei dem Radarsensor 10 um ein FMCW-Radar handelt. Die von den Antennenelementen 16 gesendeten Radarsignale sind dann rampenförmig moduliert, beispielsweise mit abwechselnd steigenden und fallenden Frequenzrampen. Die empfangenen Radarechos werden jeweils mit einem Anteil des zum Empfangszeitpunkt gesendeten Signals gemischt, so daß man auf jedem Kanal 20 ein Zwischenfrequenzsignal erhält, dessen Frequenz vom Abstand und der Relativgeschwindigkeit des georteten Objekts abhängig ist.

Die erste Auswertungsstufe 12 enthält ein Identifizierungsmodul 22, in dem für jeden der Kanäle 20 und für jede Frequenzrampe das Zwischenfrequenzsignal gesampelt und durch Schnelle Fourier-Transformation in ein Spektrum umgewandelt wird. Ein Beispiel eines solchen Spektrums ist in Fig. 2 gezeigt. In diesem Spektrum zeichnet sich jedes geortete Objekt durch einen Peak 24, 26, 28, 30 ab, d.h., ein lokales Maximum der Amplitude A bei einer bestimmten Frequenz f. Die Frequenz, bei der sich der Scheitel des Peaks befindet, definiert eine von der jeweiligen Rampensteigung abhängige lineare Beziehung zwischen dem Abstand und der Relativgeschwindigkeit des georteten Objekts.

In einem Abstands-Geschwindigkeits-Diagramm läßt sich diese Beziehung durch eine Gerade repräsentieren. In mehreren aufeinanderfolgenden Modulationsrampen, die sich in ihrer Steigung unterscheiden, erhält man somit für dasselbe Objekt unterschiedliche Peaks und entsprechend unterschiedliche Geraden, die sich in ihrer Steigung unterscheiden. Wenn die Peaks wirklich zu demselben Objekt gehören, müssen sich all diese Geraden jedoch in einem Punkt schneiden. Auf diese Weise läßt sich (mit drei oder mehr unterschiedlichen Rampensteigungen) eine eindeutige Zuordnung zwischen Peaks und Objekten treffen. Dies ermöglicht es dem Identifizierungsmodul 22, jeden Peak eindeutig mit einem zugehörigen Objekt zu identifizieren.

Die erste Auswertungsstufe 12 weist weiterhin ein Winkeldetektionsmodul 32 auf, das dazu dient, für jedes Objekt den Azimutwinkel zu bestimmen, unter dem es vom Radarsensor 10 "gesehen" wird. Dazu wird ausgenutzt, daß die Amplitude A und die Phase (also die komplexe Amplitude) des empfangenen Signals und auch des Zwischenfrequenzsignals in bestimmter Weise vom Azimutwinkel des Objekts abhängig ist. Diese Abhängigkeit wird durch eine Winkelcharakteristik beschrieben, die in einem Antennendiagramm dargestellt werden kann. Für jedes der Antennenelemente 16 wird mit Hilfe eines idealen Objekts die Winkelcharakteristik gemessen und in digitaler Form in der zweiten Auswertungsstufe 14 hinterlegt.

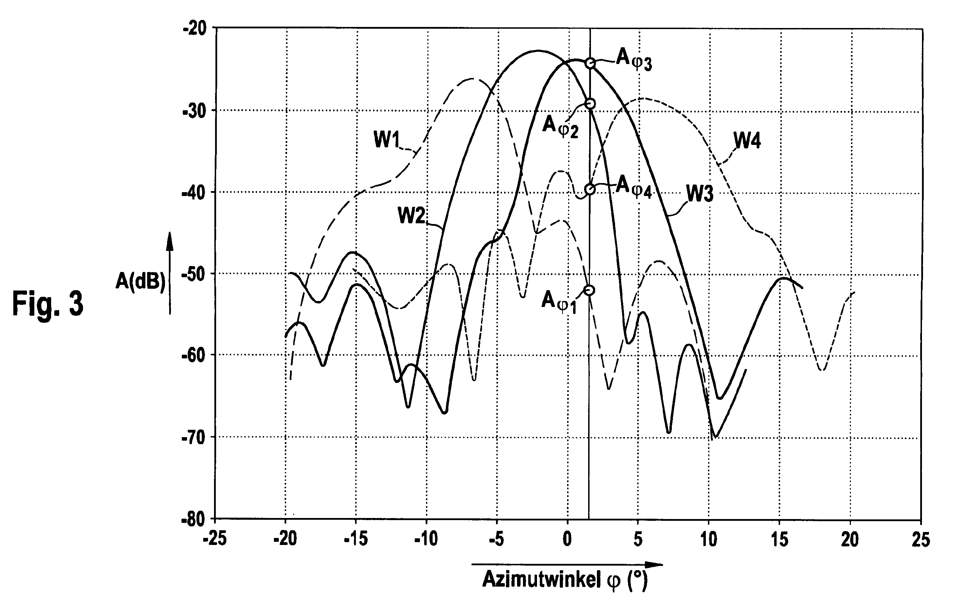

Fig. 3 zeigt als Beispiel ein Antennendiagramm mit Winkelcharakteristiken der vier Antennenelemente 16 in Fig. 1. Die Winkelcharakteristiken sind in Fig. 3 mit W1 - W4 bezeichnet, wobei die Numerierung und die Art der Linienendarstellung derjenigen der Radarkeulen 1 bis 4 in Fig. 1 entspricht.

Wenn sich nun ein ideales Objekt bei einem bestimmten Azimutwinkel befindet, in dem Beispiel nach Fig. 3 bei dem Azimutwinkel von 1.5°, so zeigt das Antennendiagramm die auf den entsprechenden Kanälen 20 zu erwartenden Amplituden $A_{\varphi 1}$-$A_{\varphi 4}$. Die Amplituden A (nur die Absolutbeträge der komplexen Amplituden sind hier graphisch dargestellt) repräsentieren dabei jeweils die Scheitelwerte der zu dem Objekt gehörenden Peaks. Idealerweise läßt sich daher der Azimutwinkel des Objekts bestimmen, indem in dem Antennendiagramm der Winkel aufgesucht wird, an dem alle vier gemessenen Amplituden mit den zugehörigen Winkelcharakteristiken übereinstimmen. Das Aufsuchen dieses Winkels wird als "Winkelfit" bezeichnet.

Nach diesem Prinzip sollte das Winkeldetektionsmodul 32 in Fig. 1 in der Lage sein, für jedes geortete Objekt einen zugehörigen Azimutwinkel $\varphi$ zu liefern, der dann in der zweiten Auswertungsstufe 14 weiter ausgewertet werden kann. Jedes Objekt wird dabei repräsentiert durch ein Paar aus Abstand und Relativgeschwindigkeit, das durch das Identifizierungsmodul 22 mit dem betreffenden Objekt identifiziert wurde. In der zweiten Auswertungsstufe 14 des Fahrerassistenzsystems werden dann diese Ortungsdaten, also die Abstände, Relativgeschwindigkeiten und Azimutwinkel der georteten Objekte,weiter ausgewertet und beispielsweise für eine automatische Abstandsregelung benutzt. Die Azimutwinkel der Objekte sind dann vor allem für die Entscheidung bedeutsam, welches der georteten Objekte sich in der von dem eigenen Fahrzeug befahrenen Fahrspur befindet und deshalb als Zielobjekt für die Abstandsregelung ausgewählt werden sollte.

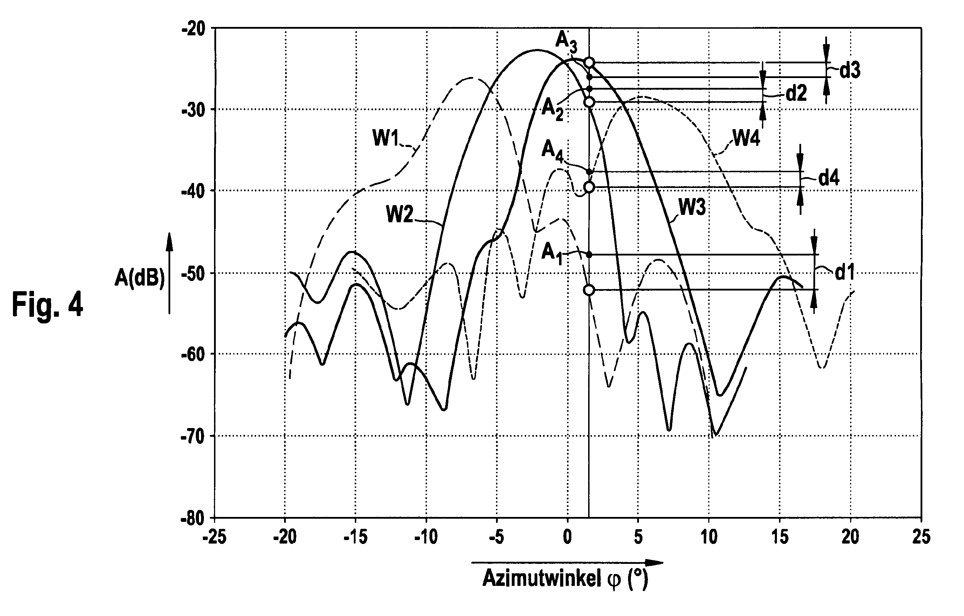

In der Praxis führen jedoch verschiedene Störeffekte dazu, daß der Winkelfit zumeist nicht so gelingt, wie dies in Fig. 3 in idealisierter Form dargestellt ist. Ein realistisches Szenario zeigt Fig. 4, wo die für ein reales Objekt in den vier Kanälen 20 erhaltenen Amplituden durch schwarze Punkte bei dem Azimutwinkel von 1,5° gekennzeichnet und mit $A_1$ - $A_4$ bezeichnet sind. Man erkennt, daß diese Amplituden mehr oder weniger von den zugehörigen idealen Amplituden abweichen, die in Fig. 4 ebenso wie in Fig. 3 durch weiße Punkte markiert sind. Die Abstände zwischen den gemessenen Amplituden $A_1$ - $A_4$ und den zugehörigen idealen Amplituden sind in Fig. 4 mit d1 - d4 bezeichnet.

Es findet sich kein Azimutwinkel, bei dem die gemessenen Amplituden $A_1$ - $A_4$ alle mit den jeweils zugehörigen Winkelcharakteristiken W1 - W4 übereinstimmen würden. Der Winkel von 1,5°, bei dem die Meßpunkte in Fig. 4 eingezeichnet sind, stellt denjenigen Winkel dar, bei dem die Übereinstimmung noch am besten ist. Der Ausdruck "am besten" läßt sich mathematisch präzise fassen, beispielsweise durch Definition einer Korrelation Q:

$$Q(\varphi) := |\Sigma\, S_k^* \cdot A_k(\varphi)| \,/\, (\,\Sigma\, |S_k|^2 \cdot \Sigma\, |A_k(\varphi)|^2\,)^{1/2}; \quad k = 1, 2, 3, 4$$

mit:

$A_k$:    komplexes Antennendiagramm des Strahls k
$S_k$:    komplexes empfangenes Signal im Strahl k

Der Azimutwinkel des Objekts wird dann der Winkel $\varphi$ sein, bei dem $Q(\varphi)$ maximal ist, und der entsprechende Maximalwert von $Q(\varphi)$ ist dann die Winkelfitgüte G. Diese Winkelfitgüte ist auf das Intervall [0,1] normiert, so daß der Wert G = 1 einem idealen Winkelfit und G = 0 einem äußerst schlechten Winkelfit entspricht.

Das Winkeldetektionsmodul 32 in Fig. 1 liefert somit für jedes geortete Objekt nicht nur den Azimutwinkel $\varphi$, sondern auch die zugehörige Winkelfitgüte G. Eine Winkelfitgüte G = 1 würde einem idealen Winkelfit entsprechen (wie in Fig. 3), und je kleiner G ist, desto schlechter ist die Winkelfitgüte und desto unzuverlässiger ist dementsprechend der zugehörige Azimutwinkel.

Wenn der Radarsensor 10 vereist ist, d.h., wenn sich auf der Oberfläche der Linse 18 oder einem Teil derselben eine Eisschicht 34 gebildet hat, wie schematisch in Fig. 1 dargestellt ist, so wird durch diese Eisschicht die Radarstrahlung zusätzlich gebrochen, und die Radarkeulen 1 bis 4 werden entsprechend verzerrt. Das Resultat ist eine entsprechende Verzerrung und Verlagerung der Winkelcharakteristiken W1 - W4, mit der Folge, daß die gemessenen Azimutwinkel $\varphi$ mit einem systematischen Fehler behaftet sein können, der unter Umständen falsche Reaktionen des Fahrerassistenzsystems provoziert.

Die durch die Eiskruste 34 verursachte Verzerrung der Winkelcharakteristiken führt jedoch nicht nur zu einem systematischen Fehler, sondern tendenziell auch zu einer Verschlechterung der Winkelfitgüte G. Aus diesem Grund wird bei dem hier vorgeschlagenen Verfahren die Winkelfitgüte G systematisch daraufhin untersucht, ob sie auf eine Vereisung des Radarsensors und damit eine Winkelblindheit, d.h., eine Verfälschung der Winkelortungsdaten hinweist.

Dabei ist jedoch zu berücksichtigen, daß eine schlechte Winkelfitgüte G auch andere Ursachen haben kann. Insbesondere werden Objekte mit einem geringen Signal/Rausch-Verhältnis generell auch eine schlechtere Winkelfitgüte haben. Solche Objekte sollten deshalb bei der Erkennung von Vereisung bzw. Winkelblindheit ausgeblendet werden.

Wie in Fig. 2 dargestellt ist, erheben sich die Peaks 24 - 30 unterschiedlich weit über den allgemeinen Rauschhintergrund, d.h., ihre Scheitelwerte haben unterschiedliche Signal/Rausch-Verhältnisse. Dem Identifizierungsmodul 22 in Fig. 1 ist ein Diskriminierungsmodul 36 zugeordnet, das diejenigen Objekte diskriminiert (ausblendet), deren Peaks ein Signal/Rausch-Verhältnis unterhalb eines bestimmten Schwellenwertes S haben, wie dies beispielsweise für den Peak 26 in Fig. 2 der Fall ist.

Generell ist dabei zu berücksichtigen, daß man für jedes Objekt zumeist vier Peaks erhält, je einen auf jedem der vier Kanäle 20, und daß diese Peaks sich in ihrer Höhe unterscheiden können. Das Diskriminierungsmodul 36 kann nun so ausgebildet sein, daß es aus diesen vier Peaks das mittlere Signal/Rausch-Verhältnis bildet oder jedes Objekt anhand des Peaks mit dem besten Signal/Rausch-Verhältnis bewertet.

Für die Erkennung der Winkelblindheit werden dann nur diejenigen Objekte ausgewählt, die ein hinreichend hohes Signal/Rausch-Verhältnis aufweisen, wie beispielsweise die Objekte, die zu den Peaks 24 und 30 in Fig. 2 gehören. Der Schwellenwert S ist dabei so gewählt, daß für die Objekte, die diesen Schwellenwert überschreiten, normalerweise auch eine sehr hohe Winkelfitgüte (G nahe 1) zu erwarten wäre.

In der hier vorgeschlagenen Ausführungsform werden die Peaks bzw. Objekte, bevor sie für die Erkennung von Winkelblindheit herangezogen werden, noch in einem Eindeutigkeitsmodul 38 daraufhin untersucht, ob für die betreffenden Peaks die Bedingung erfüllt ist, daß sie tatsächlich von einem einzigen Objekt herrühren, das durch einen eindeutigen Azimutwinkel gekennzeichnet ist.

In Fig. 2 zeigt der Peak 28 ein Beispiel für einen Peak, der zwar über dem Schwellenwert S liegt, aber die in dem Eindeutigkeitsmodul 38 geprüfte Bedingung nicht erfüllt. Dieser Peak repräsentiert nämlich in Wahrheit nicht ein einzelnes Objekt, sondern zwei Objekte, deren Peaks 28a und 28b sich zufällig so überlagern, daß sie wie ein einzelner Peak 28 erscheinen. Da die Azimutwinkel dieser Objekte im allgemeinen verschieden sein werden, ließe sich allenfalls für die (in der Praxis nicht erkennbaren) Einzelpeaks 28a und 28b ein Winkelfit mit hoher Winkelfitgüte erreichen, nicht aber für den durch Überlagerung entstehenden Peak 28. Auch dieser Peak sollte deshalb bei der Erkennung von Winkelblindheit unberücksichtigt bleiben.

Zu einer Überlagerung von zwei Einzelpeaks mit unterschiedlichen Azimutwinkeln kann es beispielsweise dann kommen, wenn zwei geortete Fahrzeuge (mit unterschiedlichen Azimutwinkeln) unterschiedliche Relativgeschwindigkeiten haben und sich außerdem zufällig auch in ihren Abständen so unterscheiden daß der durch den Dopplereffekt und die unterschiedlichen Relativgeschwindigkeiten bedingte Frequenzunterschied wieder ausgeglichen wird.

Solche Situationen lassen sich beispielsweise dadurch erkennen, daß in der zweiten Auswertungsstufe 14 die georteten Objekte über einen längeren Zeitraum, d.h., über mehrere Meßzyklen des Radarsensors 10 hinweg verfolgt werden. Da die beiden Objekte, deren Peaks sich überlagern, gemäß der obigen Annahme unterschiedliche Relativgeschwindigkeiten haben, werden sich ihre Abstände im Laufe der Zeit ändern, so daß es sich bei der Überlagerung nur um ein punktuell zu einem bestimmten Zeitpunkt auftretendes Phänomen handeln kann. Wenn man die Historie der Objekte verfolgt hat, läßt sich die Überlagerung daher als eine solche erkennen.

Eine weitere Möglichkeit zur Erkennung solcher Peaküberlagerungen ergibt sich aus der Analyse der Geschwindigkeits-Abstands-Diagramme, die im Zusammenhang mit dem Identifizierungsmodul 22 erörtert wurden. Der Einfluß, den der Abstand eines Objekts auf die Frequenz des Peaks hat, ist nämlich proportional zur Steigung der Modulationsrampe, während der Einfluß der Relativgeschwindigkeit von der Rampensteigung unabhängig ist. Wenn sich zwei Peaks auf einer Modulationsrampe überlagern, werden sie sich daher häufig auf einer anderen Modulationsrampe nicht überlagern, und auf diese Weise läßt sich feststellen, daß es sich in Wahrheit um zwei verschiedene Objekte handelt, denen sich in der Regel kein eindeutiger Azimutwinkel zuordnen läßt.

Noch eine weitere Möglichkeit zur Erkennung von Peaküberlagerungen ergibt sich daraus, daß ein Peak, der von einem idealen Einzelobjekt herrührt, in seinem Scheitelbereich eine spezielle und bekannte Form aufweist (die Fourier-Transformierte des Samplefensters), so daß das Eindeutigkeitsmodul 38 eine Peaküberlagerung erkennen kann, wenn die Form des Peaks signifikant von der erwarteten Form abweicht.

Eine Überlagerung von Peaks mit nicht eindeutigem Azimutwinkel kann beispielsweise auch dann auftreten, wenn das Radarecho eines entfernten Objekts an den linken und rechten Leitplanken der Fahrbahn reflektiert wird, bevor es wieder zum Radarsensor 10 gelangt. Die Abstände und Relativgeschwindigkeiten sind dann nahezu dentisch, da beide Teilstrahlen ja von demselben Objekt stammen, doch aufgrund der Reflexion an verschiedenen Leitplanken sind die Azimutwinkel verschieden. Solche Fälle, wie auch die zuvor geschilderten Fälle von Peaküberlagerungen, können durch nähere Analyse der Winkelfitgüte erkannt werden.

Bei einem Einzelobjekt verhält es sich typischerweise so, daß die Winkelfitgüte G bei einem ganz bestimmten Azimutwinkel (bei 1,5° in Fig. 3 und 4) ein Maximum erreicht und sich um so weiter von diesem Maximum entfernt, je weiter der betrachtete Winkel von dem tatsächlichen Azimutwinkel des Objekts entfernt ist. Das heißt, wenn man für einen gegebenen Peak die Winkelfitgüte als Funktion des Azimutwinkels $\varphi$ aufzeichnet, so erhält man eine Funktion mit einem eindeutigen Maximum bei einem bestimmten Azimutwinkel, nämlich bei dem wahren Azimutwinkel des zugehörigen Objekts. Wenn dagegen der Peak eine Überlagerung von Reflexen mit unterschiedlichen Azimutwinkeln repräsentiert, so wird die Funktion, die die Winkelfitgüte als Funktion des Azimutwinkels angibt, in der Regel zwei getrennte Maxima aufweisen. In einer Ausführungsform, in der das Winkeldetektionsmodul 32 eine solche Analyse ausführt, können deshalb Peaks die wie der Peak 28 aus einer Überlagerung von zwei Einzelpeaks entstehen, im Winkeldetektionsmodul 32 diskriminiert werden.

Für die Erkennung von Vereisung oder Winkelblindheit weist die erste Auswertungsstufe 12 in Fig. 1 ein Mittelwertmodul 40 auf, das aus den vom Winkeldetektionsmodul 32 gelieferten Winkelfitgüten G einen Mittelwert bildet, wobei jedoch nur über diejenigen Objekte gemittelt wird, die nicht aufgrund ihres niedrigen Signal/Rausch-Verhältnisses von Diskriminierungsmodul 36 diskriminiert wurden und die auch nicht vom Eindeutigkeitsmodul 38 oder vom Winkeldetektionsmodul 32 selbst als Peaküberlagerungen erkannt wurden. Der Mittelwert der Winkelfitgüte G über die verbleibenden Objekte (Peaks 24 und 30 in Fig. 2) dient dann zur Berechnung eines Indikators I für Winkelblindheit und damit auch für die Vereisung. Da die winkelblindheit um so stärker sein wird, je schlechter die Winkelfitgüte G ist, definiert man den Indikator I, der an die zweite Auswertungsstufe 14 übermittelt wird, als monoton fallende Funktion von G, bespielsweise $I := 1 - G$.

Wahlweise kann das Mittelwertmodul 40 auch so ausgebildet sein, daß es Objekte mit hohem Signal/Rausch-Verhältnis bei der Mittelwertbildung stärker gewichtet als Objekte mit niedrigem Signal/Rausch-Verhältnis. Das Diskriminierungsmodul 36 könnte dann entfallen oder es könnte in das Mittelwertmodul 40 integriert werden, indem alle Objekte, für das Signal/Rausch-Verhältnis kleiner ist als S, das Gewicht null erhalten.

**Patentansprüche**

1. Verfahren zur Erkennung von Vereisung bei einem winkelauflösenden Radarsensor (10) in einem Fahrerassistenzsystem für Kraftfahrzeuge, in dem Signale von mehreren Antennenelementen (16), die jeweils eine spezifische Winkelcharakteristik ($W_1$-$W_4$) aufweisen, mit den entsprechenden Winkelcharakteristiken verglichen werden und

der Azimutwinkel ($\phi$) eines georteten Objekts anhand einer Winkelfitgüte (G) bestimmt wird, die angibt, wie gut die Signale der Antennenelemente für einen gegebenen Azimutwinkel mit den Winkelcharakteristiken übereinstimmen, wobei ein Indikator (I) für Vereisung gebildet wird, **dadurch gekennzeichnet, daß** der Indikator (I) eine monoton fallende Funktion eines gewichteten Mittelwertes der Winkelfitgüten (G) der georteten Objekte ist, wobei Objekte mit hohem Signal/Rausch-Verhältnis stärker gewichtet werden als Objekte mit niedrigem Signal/Rausch-Verhältnis.

**2.** Verfahren nach Anspruch 1, **dadurch gekennzeichnet, daß** in den Indikator (I) nur Objekte einfließen, deren Signal/Rausch-Verhältnis oberhalb eines bestimmten Schwellenwertes (S) liegt.

**3.** Verfahren nach Anspruch 1 oder 2, **dadurch gekennzeichnet, daß** die Signale der Antennenelemente (16) darauf untersucht werden, ob sie Objekte oder Ensemble von Objekten repräsentieren, denen sich kein eindeutiger Azimutwinkel ($\phi$) zuordnen läßt, und daß solche Objekte oder Ensemble bei der Bildung des Indikators (I) unberücksichtigt bleiben.

**4.** Verfahren nach Anspruch 3, für Fahrerassistenzsysteme mit einem FMCW-Radar als Radarsensor (10), **dadurch gekennzeichnet, daß** in den Spektren der Signale der Antennenelemente (16) auftretende Peaks (24, 26, 28, 30) darauf untersucht werden, ob sie eine für Einzelpeaks charakteristische Form haben.

**5.** Verfahren nach Anspruch 3 oder 4, für Fahrerassistenzsysteme mit einem FMCW-Radar als Radarsensor (10), **dadurch gekennzeichnet, daß** die Spektren der Signale der mehreren Antennenelemente (16) jeweils für unterschiedliche Modulationsrampen untersucht werden und Peaks in den für mehrere Modulationsrampen erhaltenen Spektren anhand der ihnen entsprechenden Kombinationen von Abständen und Relativgeschwindigkeiten mit Objekten identifiziert werden, wobei Überlagerungen von Einzelpeaks (28a, 28b) erkannt und bei der Bildung des Indikators (I) eliminiert werden.

**6.** Verfahren nach einem der Ansprüche 3 bis 5, **dadurch gekennzeichnet, daß** die zeitliche Entwicklung der Abstände und Relativgeschwindigkeiten der georteten Objekte verfolgt wird, daß dabei Situationen erkannt werden, in denen die Signale von zwei oder mehr Objekten vorübergehend ununterscheidbar werden, und daß die Signale dieser Objekte bei der Bildung des Indikators (I) unberücksichtigt bleiben.

**7.** Verfahren nach einem der Ansprüche 3 bis 6, **dadurch gekennzeichnet, daß** für ein geortetes Objekt die Winkelfitgüte (G) für mehrere mögliche Azimutwinkel ($\phi$) dieses Objekts bestimmt wird und dieses Objekt bei der Bildung des Indikators (I) nur dann berücksichtigt wird, wenn die Winkelfitgüte (G) als Funktion des Azimutwinkels ($\phi$) ein eindeutiges Maximum aufweist.

**8.** Fahrerassistenzsystem für Kraftfahrzeuge, mit einem winkelauflösenden Radarsensor (10), Verfahren nach einem der Ansprüche 3 bis 6, **dadurch gekennzeichnet, daß** in einem dem Radarsensor (10) nachgeschalteten Auswertungssystem (12, 14) ein Verfahren nach einem der vorstehenden Ansprüche implementiert ist.

**9.** Softwareprodukt für Fahrerassistenzsysteme für Kraftfahrzeuge, die einen winkelauflösenden Radarsensor (10) aufweisen, **dadurch gekennzeichnet, daß** es Programmcode enthält, der, wenn er in dem Fahrerassistenzsystem läuft, dieses veranlaßt, ein Verfahren nach einem der vorstehenden Ansprüche auszuführen.

**Claims**

**1.** Method for detecting icing in the case of an angle-resolving radar sensor (10) in a driver assistance system for motor vehicles, in which signals from a plurality of antenna elements (16), which respectively have a specific angle characteristic ($W_1$-$W_4$) are compared with the corresponding angle characteristics, and the azimuth angle ($\phi$) of a located object is determined with the aid of an angle fit quality (G) which specifies how well the signals from the antenna elements for a given azimuth angle correspond to the angle characteristics, an indicator (I) for icing being formed, **characterized in that** the indicator (I) is a monotonically falling function of a weighted mean value of the angle fit qualities (G) of the located objects, objects with a high signal-to-noise ratio being weighted more heavily than objects with a low signal-to-noise ratio.

**2.** Method according to Claim 1, **characterized in that** only objects whose signal-to-noise ratio lies above a specific threshold value (S) feature in the indicator (I) .

3. Method according to Claim 1 or 2, **characterized in that** the signals from the antenna elements (16) are examined as to whether they represent objects or an ensemble of objects to which no unique azimuth angle ($\phi$) can be assigned, and **in that** such objects or ensemble are left out of account in the formation of the indicator (I).

4. Method according to Claim 3, for driver assistance systems with an FMCW radar as radar sensor (10), **characterized in that** peaks (24, 26, 28, 30) occurring in the spectra of the signals from the antenna elements (16) are examined as to whether they have a shape characteristic of individual peaks.

5. Method according to Claim 3 or 4, for driver assistance systems with an FMCW radar as radar sensor (10), **characterized in that** the spectra of the signals from the plurality of antenna elements (16) are respectively examined for different modulation ramps, and peaks in the spectra obtained for a plurality of modulation ramps are identified with objects with the aid of the combinations, corresponding to them, of distances and relative speeds, superimpositions of individual peaks (28a, 28b) being detected and eliminated during the formation of the indicator (I).

6. Method according to one of Claims 3 to 5, **characterized in that** the temporal development of the distances and relative speeds of the located objects is followed, **in that** situations are detected in this case in which the signals from two or more objects cannot be distinguished temporarily, and **in that** the signals of said objects are left out of account in the formation of the indicator (I).

7. Method according to one of Claims 3 to 6, **characterized in that** for a located object the angle fit quality (G) for a plurality of possible azimuth angles ($\phi$) of said object is determined, and said object is taken into account in the formation of the indicator (I) only when the angle fit quality (G) has a unique maximum as a function of the azimuth angle ($\phi$).

8. Driver assistance system for motor vehicles, having an angle-resolving radar sensor (10), **characterized in that** a method according to one of the preceding claims is implemented in an evaluation system (12, 14) connected downstream of the radar sensor (10).

9. Software product for driver assistance systems for motor vehicles which have an angle-resolving radar sensor (10), **characterized in that** it includes a program code which, when running in the driver assistance system, prompts the latter to execute a method according to one of the preceding claims.

**Revendications**

1. Procédé de détection du givrage sur un capteur radar (10) à résolution angulaire dans un système d'assistance du conducteur pour véhicules automobiles, dans lequel les signaux de plusieurs éléments d'antenne (16) qui présentent respectivement une caractéristique angulaire ($W_1$-$W_4$) spécifique sont comparés avec les caractéristiques angulaires correspondantes et l'angle d'azimut ($\phi$) d'un objet localisé est déterminé au moyen d'une qualité de concordance de l'angle (G) qui indique la qualité de la concordance des signaux des éléments d'antenne pour un angle d'azimut donné avec les caractéristiques angulaires, un indicateur (I) de givrage étant formé, **caractérisé en ce que** l'indicateur (I) et une fonction descendante monotone d'une moyenne pondérée des qualités de concordance de l'angle (G) des objets localisés, les objets qui présentent un rapport signal/bruit élevé ayant un poids plus fort que les objets qui présentent un rapport signal/bruit faible.

2. Procédé selon la revendication 1, **caractérisé en ce que** seuls interviennent dans l'indicateur (I) les objets dont le rapport signal/bruit se trouve au-dessus d'une valeur de seuil donnée (S).

3. Procédé selon la revendication 1 ou 2, **caractérisé en ce que** les signaux des éléments d'antenne (16) sont analysés pour vérifier s'ils représentent des objets ou des ensembles d'objets auxquels ne peut être associé aucun angle d'azimut ($\phi$) explicite, et **en ce que** de tels objets ou ensembles ne sont pas pris en compte lors de la formation de l'indicateur (I).

4. Procédé selon la revendication 3, pour des systèmes d'assistance au conducteur munis d'un radar FMCW en tant que capteur radar (10), **caractérisé en ce que** les crêtes (24, 26, 28, 30) qui se produisent dans les spectres des signaux sont analysées pour vérifier si elles présentent une forme caractéristique pour les crêtes individuelles.

5. Procédé selon la revendication 3 ou 4, pour des systèmes d'assistance au conducteur munis d'un radar FMCW en tant que capteur radar (10), **caractérisé en ce que** les spectres des signaux de plusieurs éléments d'antenne (16) sont respectivement analysés pour y déceler des rampes de modulation différentes et les crêtes dans les spectres qui contiennent plusieurs rampes de modulation sont identifiées comme étant des objets au moyen des combinaisons qui leur correspondent d'écarts et de vitesses relatives, les superpositions de crêtes individuelles (28a, 28b) étant détectées et éliminées lors de la formation de l'indicateur (I).

6.  Procédé selon l'une des revendications 3 à 5, **caractérisé en ce que** l'évolution dans le temps des écarts et des vitesses relatives des objets localisés est suivie, **en ce que** les situations dans lesquelles les signaux de deux objets ou plus sont temporairement impossibles à différencier sont ici détectées, et **en ce que** les signaux de ces objets ne sont pas pris en compte lors de la formation de l'indicateur (I).

7.  Procédé selon l'une des revendications 3 à 6, **caractérisé en ce que** pour un objet localisé, la qualité de concordance de l'angle (G) est déterminée pour plusieurs angles d'azimut ($\phi$) possibles de cet objet et cet objet n'est pris en compte lors de la formation de l'indicateur (I) que si la qualité de concordance de l'angle (G) en fonction de l'angle d'azimut ($\phi$) présente un maximum explicite.

8.  Système d'assistance du conducteur pour véhicules automobiles, présentant un capteur radar (10) à résolution angulaire, **caractérisé en ce qu'**un procédé selon l'une des revendications précédentes est mis en oeuvre dans un système d'interprétation (12, 14) branché à la suite du capteur radar (10).

9.  Produit logiciel pour systèmes d'assistance du conducteur pour véhicules automobiles, présentant un capteur radar (10) à résolution angulaire, **caractérisé en ce que** lorsqu'il est exécuté dans le système d'assistance du conducteur, il provoque la mise en oeuvre d'un procédé selon l'une des revendications précédentes.

**Fig. 1**

**Fig. 2**

Fig. 3

EP 2 401 630 B1

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2000826 A1
- DE 19945268 A1
- DE 19948253 A1